# EUROPEAN PATENT SPECIFICATION

(11) **EP 0 437 038 B1**
(45) Date of publication and mention of the grant of the patent: **21.12.1994**
(21) Application number: 90313022.7
(22) Date of filing: 30.11.1990
(51) Int. Cl.: D06F 43/08, B01D 53/02

(54) **Method of controlling solvent vapor concentrations in the cleaning of articles and apparatus useful therefore**
Verfahren zum Kontrollieren von Konzentrationen an Lösungsmitteldämpfen bei der Reinigung von Gegenständen und dazu geeignete Vorrichtung
Procédé pour contrôler les concentrations de vapeurs de solvants pendant le nettoyage d'articles et appareil utile à cela

(30) Priority: 08.12.1989 GB 8927866
(43) Date of publication of application: 17.07.1991
(73) Proprietor: THE DOW CHEMICAL COMPANY, Midland, Michigan 48640 (US)
(72) Inventor: Boppart, Stephan Walter, CH-8820 Wädenswil (CH); Kümin, Marius Adelbert Maria, CH-6330 Cham (CH)
(74) Representative: Raynor, John

(56) References cited:
- US-A- 4 788 776

## Description

The present invention relates to a method of controlling solvent vapor concentrations in the cleaning of articles with organic solvents and to an apparatus for cleaning articles such as textiles and metals.

Methods and apparatuses for cleaning articles with organic solvents are well known. They are for example used in the dry cleaning of textiles etc. and for the degreasing of metals. The organic solvents are recovered during the drying phase in order to avoid losses of solvents and environmental pollution associated therewith. Usually the gaseous organic solvents which are in the cleaning chamber during the drying phase are cooled and condensed in a condenser. However, mainly hydrocarbons and particularly chlorinated and/or fluorinated hydrocarbons are used as solvents in the cleaning process. Many of them, for example, trichlorotrifluoroethane, 1,1,1-trichloroethane and trichloromonofluoromethane have a low boiling point and cannot be recovered by condensation to a sufficient extent. Therefore, the non-condensed organic solvents are usually adsorbed by adsorbents, such as activated carbon. Several processes have been suggested for recovering the organic solvents in the cleaning of articles.

U.S Patent 3,883,325 suggests recovering solvent vapors from an air stream which is recycled through an air cooler and then through an adsorbing unit in which the air stream, after it has left the cooler, is heated again before entering the adsorber. It is suggested that the air stream is first passed through the cooler bypassing the adsorber and then, after the solvent concentration in the air has been reduced, the adsorber is connected into the circuit. Activated carbon is used for adsorbing the organic solvents.

British Patent specification 996,578 relates to a dry cleaning apparatus comprising a cleaning drum, a condenser and a solvent adsorber which is filled with activated carbon. German Offenlegungsschrift 37 37 783 also relates to a dry cleaning machine having a cleaning drum, a condenser and an adsorber containing activated carbon.

According to the teachings of U.S. Patent 3,883,325, British Patent 996,578 and German Offenlegungsschrift 37 37 783, activated carbon is regenerated with steam, the steam-solvent mixture is condensed and water is separated from the organic solvent. This necessary separation step is disadvantageous.

Accordingly, other methods and means for regenerating the adsorbent, such as activated carbon, have been suggested.

U.S Patent 4,583,985 relates to the recovery of organic solvents in dry cleaning and solvent finishing. In the taught process the solvents which occur in the form of a solvent vapor/air mixture are partially condensed by cooling. A saturation partial pressure of the solvent in the solvent vapor/air mixture of not more than 0.25 is set up. The solvent vapors are adsorbed with activated carbon while the solvent free air is blown out to the environment. The adsorbed solvents are desorbed by means of a solvent vapor/air mixture of the same concentration as in the adsorption process and at temperatures of 100°C to 150°C, the flow through the activated carbon being in the opposite direction to that in the adsorption process. The desorbed solvent is condensed in a vaporizer. However, a vaporizer having a relatively high heat exchange area and a high performance compressor are necessary in combination with a liquefier in order to reach this saturation partial pressure. Furthermore, although a high amount of solvent vapor is adsorbed in the activated carbon, there is still a risk of solvent release to the environment. An undesirably high amount of solvent vapor may be released to the environment if the adsorption capacity of the activated carbon is close to exhaustion or exhausted.

German Patent 36 09 587 (equivalent to U.S. Patent 4,788,776) suggests a dry-cleaning machine having a cleaning drum, a heat exchange unit, consisting of a cooler and a heater, one adsorber and a fan for circulating air. The conduit system has several by-passes which allow the following connections, seen in the direction of the circulating air: a) cleaning drum - heat exchange unit - cleaning drum, b) cleaning drum - adsorber - cleaning drum, c) adsorber - heat exchange unit - adsorber. In the disclosed cleaning process the solvent vapor is partially condensed by circulating the solvent vapor/air mixture in conduit system a), the non-condensed solvent is adsorbed by circulating the solvent vapor/air mixture in conduit system b) and the adsorbed solvent is then desorbed by circulating air in conduit system c) wherein the air is heated in the heater, the hot air desorbs the solvent in the adsorber at a high temperature and the desorbed solvent is condensed in the cooler. However, the necessary by-passes require considerable space and at least four butterfly valves.

For avoiding these by-passes and butterfly valves German Offenlegungsschrift 37 26 245 (equivalent to U.S. Patent 4,850,119) suggests, after partial condensation of the solvent vapors originating from the cleaning drum, removal of a portion of the circulating air stream which portion is passed over an adsorber. Two independent air circulations are suggested. The adsorbent in the adsorber is regenerated with hot gas and the desorbed solvent is condensed in a cooler. Unfortunately, the suggested process and equipment are relatively complicated.

Due to the deficiencies of the known methods of recovering solvent vapors and of the known apparatuses for cleaning articles, it would be desirable to provide a simple solution for solving the problems relating to the solvent vapors in the cleaning of articles. Specifically, it would be desirable to avoid the contact of the solvent vapors with steam during their desorption. Furthermore, it would be desirable to provide a very simple apparatus for cleaning articles which minimizes the contamination of the environment with solvent vapours during its operation.

Accordingly, one aspect of the present invention is a method of controlling the solvent vapour concentration in the cleaning of articles with an organic solvent which solvent vapour is mixed with air and is obtained in a cleaning chamber in the drying phase of the cleaning process after the liquid component of the solvent has been pumped away, comprising the following steps:
(a) partially condensing the solvent vapour;
(b) passing the non-condensed solvent vapour/air mixture at least once through at least one adsorber containing an adsorbent for the organic solvent and recycling the outlet stream from the adsorber(s) directly to the cleaning chamber;
(c) after completion of the adsorption, opening the cleaning chamber for loading and/or unloading the cleaning chamber and closing the cleaning chamber;
(d) heating the adsorbent to desorb the solvent vapour

characterized in that in the desorption step (d) air is passed from the cleaning chamber at least once through the adsorber(s) containing the heated adsorbent and the outlet stream from the adsorber(s) is directly recycled to the cleaning chamber.

A further aspect of the present invention is an apparatus for cleaning articles comprising a cleaning chamber, a condenser, at least one adsorber, a conduit system connecting the cleaning chamber, condenser and adsorber(s), a ventilator and a control system allowing the control of gas circulation in said conduit system wherein an outlet conduit of the cleaning chamber is connected with an inlet conduit of the condenser and with an inlet conduit of the adsorber(s); an inlet conduit of the cleaning chamber is connected with an outlet conduit of the condenser and with an outlet conduit of the adsorber(s); and the condenser and the adsorber(s) are in parallel, characterized in that the ventilator and the control system allow only two ways of gas circulation in the conduit system connecting the cleaning chamber, condenser and adsorber(s), said ways either being
(i) cleaning chamber - condenser - cleaning chamber or
(ii) cleaning chamber - adsorber(s) -cleaning chamber.

Figure 1 is a diagrammatic illustration of one embodiment of the cleaning apparatus of the present invention.

Figure 2 is a diagrammatic illustration of another embodiment of the cleaning apparatus of the present invention.

The method of the invention is useful in the cleaning of articles such as textiles or fells, electronic parts or metals. It is particularly useful in the cleaning of metals or electronic parts such as the degreasing of metallic surfaces.

The method of the present invention is particularly useful if the solvents are hydrocarbons, typically having four or more carbon atoms, or a mixture of such hydrocarbons, such as gasoline, or partially or totally halogenated hydrocarbons, in particular chlorinated and/or fluorinated saturated and unsaturated hydrocarbons having one to three carbon atoms such as methylene chloride, 1,1,1-trichloroethane, carbon tetrachloride, 1,1,2,2-tetrachloroethene, trichloromonofluoromethane or trichlorotrifluoroethane. The solvent may also be a mixture of hydrocarbons, halogenated hydrocarbons or halocarbons.

Processes for cleaning articles with an organic solvent comprise a drying phase in which the liquid component of the solvent is pumped away in a known way, for example to a liquid tank. For controlling the solvent vapor concentration, the solvent vapor is recovered and recycled as described below.

In a first step a), the solvent vapor is partially condensed in order not to load the adsorbent with very high amounts of solvent. The solvent vapor can be condensed in a known condenser. Useful temperatures depend on the type of organic solvent and on the available condenser. For partially condensing halogenated hydrocarbons, the temperature usually is below 5°C, preferably below -10°C and more preferably below -20°C. The solvent vapor is condensed by transferring the solvent vapor/air mixture from the cleaning chamber to a condenser and recycling the outlet stream from the condenser to the cleaning chamber. A pump or ventilator is useful for cycling the solvent vapor/air mixture from the cleaning chamber to the condenser and from the condenser back to the cleaning chamber. If additional drying of the articles is desired, it is advisable to heat the solvent vapor/air mixture after having passed the condenser such that a warm solvent vapor/air mixture contacts the articles in the cleaning chamber. The solvent vapor/air mixture may pass the condenser and the cleaning chamber several times.

In a second step b), the non-condensed solvent vapor/air mixture is transferred from the cleaning chamber to an adsorber containing an adsorbent for the organic solvent. After the solvent vapor/air mixture has passed through the adsorber, the outlet stream from the adsorber is directly recycled to the cleaning chamber. The solvent vapor/air mixture is circulated by means of a pump or ventilator which is different from or the same as the one used for circulating a solvent vapor/air mixture from the cleaning chamber to the condenser and back to the cleaning chamber. The solvent/vapor air mixture can be passed through the adsorber and recycled to the cleaning chamber several times until the concentration of the solvent vapor is sufficiently low or the adsorbent is exhausted. If the adsorbent is exhausted before the concentration of the solvent vapor in the solvent vapor/air mixture is low enough, the solvent vapor/air mixture can be passed through one or more further adsorbers which are arranged in a parallel fashion with respect to each other. Useful types of adsorbers are generally known. For example, in one useful type of adsorber the adsorbent is arranged in several individual portions in order to make an optimal use of the adsorbent capacity.

The adsorption of the organic vapor is conveniently carried out at about atmospheric pressure. The adsorption temperature preferably is below 50°C, more preferably below 30°C. The adsorption temperature usually is above -30°C, a temperature of from -20°C to 20°C being preferred. It may be advantageous to cool the solvent vapor/air mixture before or during it passes through the adsorber.

Preferably, the adsorption is continued until a state of equilibrium is reached in the adsorbent at the chosen adsorption temperature.

When the adsorption of the solvent vapor is completed, in a third step c) the cleaning chamber is opened for loading and/or unloading the cleaning chamber. The cleaning chamber is then closed again. In further steps d) and e), the adsorbent is heated and air from the cleaning chamber is passed at least once through the adsorber(s) containing the heated adsorbent. The outlet stream from the adsorber(s) is directly recycled to the cleaning chamber. The adsorbent may be heated before or preferably after closing of the cleaning chamber, but air circulation should only be started after having closed the cleaning chamber. Air circulation is preferably started during or after heating of the adsorbent. Preferably, air is circulated for desorbing (regenerating) the adsorbent until a state of equilibrium is reached in the adsorbent at the chosen desorption temperature. The regeneration of the adsorbent can be carried out in a similar manner as the adsorption described above except that the temperature of the adsorbent is higher. Preferably, the gas stream flows during the desorption step in the same direction as in the adsorption step. A temperature of more than 70°C, in particular of 80°C or more, is preferred in order to achieve a reasonable desorption rate. The desorption temperature is generally below 170°C. In the case of halogenated hydrocarbons or halocarbons, it is recommended that the desorption temperature be not more than 120°C, preferably not more than 110°C. The increased temperature may be achieved by heating the air before it passes through the adsorber. Alternatively, the adsorbent can be directly heated. A known heat exchanger may be used for heating the adsorbent. Such a heat exchanger may for example make use of a hot/cold water system for controlling the temperature in the adsorbent.

Several types of adsorbents can be comprised in the adsorbers. Useful adsorbents are for example activated carbon, molecular sieves, silica gel, adsorptive or absorptive resins.

The most preferred adsorptive resins are adsorptive porous resin beads which have been prepared by swelling purified haloalkylated, cross-linked beads of a copolymer comprising units of i) styrene or an alkylstyrene (for example a C₁-C₃ alkylstyrene such as alpha-methyl styrene) and ii) divinylbenzene and/or trivinylbenzene in an inert organic liquid and post-cross-linking the swollen beads in the presence of a Friedel-Crafts catalyst. The haloalkylated cross-linked copolymer beads of i) styrene or an alkylstyrene and ii) divinylbenzene and/or trivinylbenzene which are used for post-cross-linking to form the adsorptive porous resin beads are a well-known class of materials as exemplified by U.S. Patents 4,297,220, 4,564,644 and 4,382,124. The swelling and post-cross-linking in the presence of a Friedel-Crafts catalyst is generally known from East German patent application DD-A-249,703. Those adsorptive porous resin beads are particularly suitable for adsorbing halocarbons or halogenated hydrocarbons that are microporous and are made i) from 99.8 to 98.2 percent, preferably from 99.7 to 98.5 percent and more preferably from 99.5 to 99.0 percent styrene or an alkylstyrene and ii) from 0.2 to 1.8 percent, preferably from 0.3 to 1.5 percent and more preferably from 0.5 to 1.0 percent divinylbenzene, based on the total weight of i) and ii). The microporous copolymer beads have an average pore diameter of up to 2.8 nm, preferably from 0.5 to 2.5 nm, more preferably from 1 to 2 nm.

The required amount of adsorbent is mainly given by the volume of the cleaning chamber, the partial pressure of the solvent vapor after the condensation step a), on the adsorption and desorption temperatures in steps b) and c) and on the required solvent vapor concentration in the outlet stream from the adsorber in the adsorption step b).

The process of the present invention is very simple and avoids the contact of steam with the solvent in the desorption step d). Furthermore, apart from loading and/or unloading cleaning chamber, the system is closed. In the process described in U.S. Patent 4,583,985 the whole amount of outlet gases from the adsorber is directly released to the environment which is not the case in the present invention. According to the present invention the adsorbed solvent vapors need not be recovered or disposed of but they are only temporarily stored in the adsorber. The present invention mainly makes use of the adsorbent as a temporary storage system due to its different capacities at different temperatures.

Since the desorbed organic solvents are not condensed in a condenser but are directly recycled to the cleaning chamber, a less sophisticated system for controlling the gas flow is required than in the dry cleaning machine disclosed in German Patent 36 09 587. Furthermore, when condensing the desorbed organic solvents, the hot gas obtained by regeneration of the adsorbent must contain a high partial pressure of organic solvent vapors in order to achieve a sufficient condensation. In the method of the present invention, the gas obtained from the regeneration of the adsorbent needs not to fulfill such requirements.

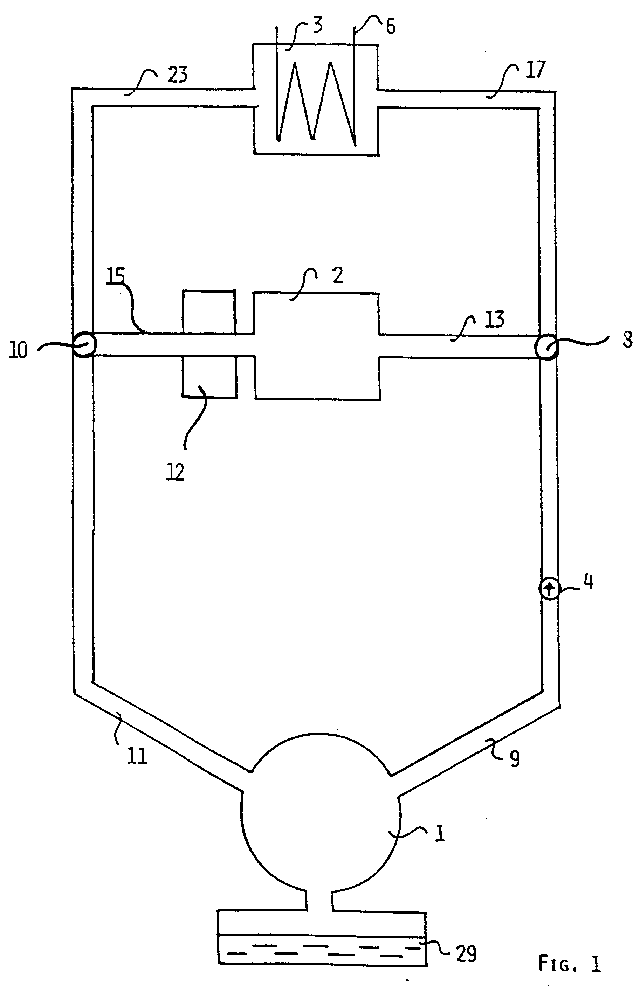

Referring now to Figure 1, the apparatus of the present invention for cleaning articles comprises a cleaning chamber 1, a condenser 2, an adsorber 3, a ventilator 4 (that is, a device for circulating the various gases in the system), a conduit system connecting the cleaning chamber, condenser and the adsorber and a control system allowing the control of gas circulation in the said conduit system. The conduit system contains an outlet conduit 9 of the cleaning chamber 1 which is connected with an inlet conduit 13 of the condenser 2 and with an inlet conduit 17 of the adsorber 3. The conduit system further comprises an inlet conduit 11 of the cleaning chamber 1 which is connected with a outlet conduit 15 of the condenser 2 and with an outlet conduit 23 of the adsorber 3. The control system allows two ways of gas circulation in the conduit system connecting the cleaning chamber, condenser and adsorber, that is either (I) cleaning chamber - condenser - cleaning chamber or (II) cleaning chamber - adsorber - cleaning chamber. The adsorber and the condenser are in parallel. The control system typically consists of a set of valves, such as known three-way valves. The useful types of valves and their suitable positions in the conduit system for allowing the said two ways of gas circulation are known in the art and therefore not discussed in great detail. For example, a first three-way valve 8 is located at the junction point of the outlet conduit 9 of the cleaning chamber, the inlet conduit 13 of the condenser and the inlet conduit 17 of the adsorber. A second three-way valve 10 is located at the junction point of the inlet conduit 11 of the cleaning chamber, the outlet conduit 15 of the condenser and the outlet conduit 23 of the adsorber.

Typically the apparatus of the present invention also comprises a liquid tank 29 which is connected with the cleaning chamber 1. Liquid tanks including connections to cleaning chambers and liquid pumps are known in the art and not further described herein.

It is advisable to arrange the ventilator 4 in the conduit system between the cleaning chamber 1 and the junction point of the outlet conduit 9, the inlet conduit 13 and the inlet conduit 17, as shown in figure 1. If desired, the cleaning apparatus may be provided with a further ventilator (not shown) located between the adsorber 3 and the junction point of the outlet conduit 9, the inlet conduit 13 and the inlet conduit 17.

Advantageously, the adsorber 3 is provided with a heat exchanger 6. The heat exchangers should not only allow heating of the adsorber but also its cooling in order to efficiently remove the adsorption heat from the adsorber. Adsorbers comprising a heat exchanger are known in the art.

A heater 12 is advantageously arranged between the condenser 2 and the junction point of the inlet conduit 11 of the cleaning chamber, the outlet conduit 15 of the condenser and the outlet conduit 23 of the adsorber. A heater is particularly suitable in the dry-cleaning of textiles when in the drying phase the solvent vapor/air mixture circulates between the cleaning chamber and the condenser and this mixture is reheated after having passed the condenser for further drying of the articles in the cleaning chamber. The condenser should be provided with a means for removing the recovered organic solvent from the adsorber. Such means, for example an outlet tube are known.

The expression "outlet" and "inlet" conduit relates to the direction of the gas circulation.

Advantageously, the cleaning apparatus contains a means for pressure compensation (not shown) in the pipe system in order to compensate for the pressure reduction/pressure increase due to the cooling/heating of the gases in the cleaning apparatus. Means for pressure compensation, for example bellows, surge tanks, or tanks with floating heads are generally known and not described here in full detail.

The inlet and outlet conduits of the adsorber are preferably equipped with a means of measuring the solvent concentration in the solvent vapor/air mixture.

When the cleaning apparatus illustrated by Figure 1 is in operation, in the drying phase of the cleaning process the liquid solvent in the cleaning chamber 1 is pumped to the liquid tank 29 after having washed the articles in the cleaning chamber. The solvent vapor/air mixture is circulated from the cleaning chamber 1 to the condenser 2 and back to the cleaning chamber 1 by means of the ventilator 4 in the direction indicated by the arrow in Figure 1. After sufficient gas circulation and condensation of the solvent vapor, the solvent vapor/air mixture is circulated from the cleaning chamber 1 to the adsorber 3 and back to the cleaning chamber 1 by means of the ventilator 4. After sufficient adsorption, the cleaning chamber 1 is opened for loading/unloading purposes and closed again. The adsorbent is heated by means of a heat exchanger 6 and air is circulated from the cleaning chamber 1 to the adsorber 3 and back to the cleaning chamber 1. The cleaning chamber is then ready again for cleaning articles. During the cleaning of articles the ventilator 4 is out of operation. The cleaning apparatus should be provided with known means (not shown) for preventing the solvent vapors from escaping via the inlet pipe 11 and the outlet pipe 9 of the cleaning chamber 1 during the washing phase of the cleaning process. By using two three-way valves 8, 10 for controlling the gas circulation in the circuits (I) cleaning chamber - condenser - cleaning chamber and (II) cleaning chamber - adsorber(s) - cleaning chamber, solvent vapors can be prevented from escaping from the cleaning chamber into the condenser or adsorber.

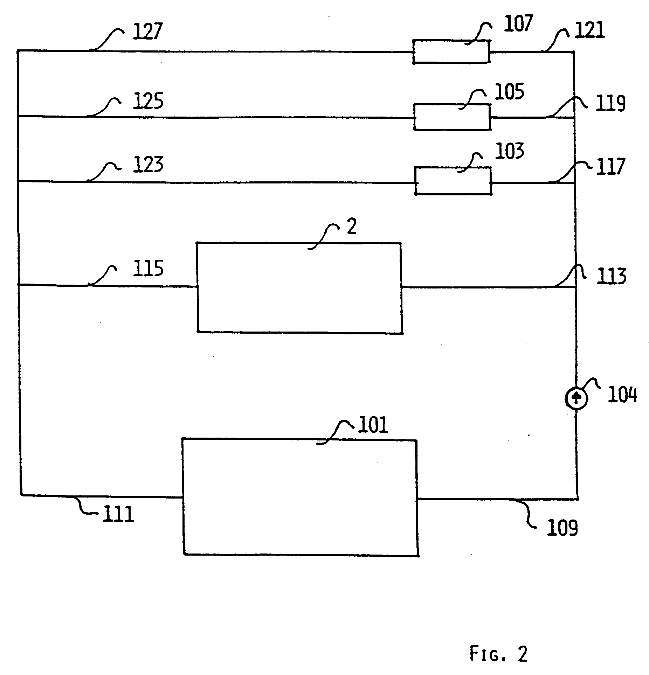

Referring now to Figure 2, Figure 2 illustrates another embodiment of the cleaning apparatus of the present invention. Figure 2 illustrates that the cleaning apparatus may comprise several adsorbers in parallel (three adsorbers are shown). The apparatus comprises a cleaning chamber 101, a condenser 102, adsorbers 103, 105, 107 and a ventilator 104. The valve system which allows the circulation of the gas stream from the cleaning chamber 101 either over the condenser 102 or over a first adsorber 103 or over a second adsorber 105 or over a third adsorber 107 and back to the cleaning chamber 101 is known and not shown in Figure 2. The outlet conduit 109 of the cleaning chamber 1 is connected with the inlet conduit 113 of the condenser 2 and with the inlet conduit 117, 119 and 121 of the adsorbers 103, 105 and 107. The inlet conduit 111 of the cleaning chamber 1 is connected with the outlet conduit 115 of the condenser 102 and with the outlet conduit 123, 125, 127 of the adsorbers 103, 105, and 107.

In operation, the cleaning apparatus illustrated by Figure 2 essentially works in the same way as cleaning apparatus illustrated by Figure 1. In the adsorption step, the solvent vapor/air mixture is circulated from the cleaning chamber 101 to the adsorber 103 and back to cleaning chamber 101 by means of the ventilator 104. If the adsorbent in adsorber 103 is exhausted prior to sufficient adsorption of the organic solvent, the solvent vapor/air mixture is circulated from the cleaning chamber 101 to the adsorber 105 and back to the cleaning chamber. If desired, the solvent vapor/air mixture is also circulated from the cleaning chamber 101 to a third adsorber 107 and back to cleaning chamber 101. The cleaning apparatus may contain additional adsorbers which are not shown in Figure 2. In the desorption step, generally the adsorbent in adsorber 107 is first desorbed, then the adsorbent in adsorber 105 and last the adsorbent in adsorber 103 by passing air from the cleaning chamber at least once through the adsorbers.

## Claims

1. A method of controlling the solvent vapour concentration in the cleaning of articles with an organic solvent which solvent vapour is mixed with air and is obtained in a cleaning chamber (1; 101) in the drying phase of the cleaning process after the liquid component of the solvent has been pumped away comprising the following steps:
(a) partially condensing the solvent vapour;
(b) passing the non-condensed solvent vapour/air mixture at least once through at least one adsorber (3; 103, 105, 107) containing an adsorbent for the organic solvent and recycling the outlet stream from the adsorber(s) directly to the cleaning chamber (1; 101);
(c) after completion of the adsorption, opening the cleaning chamber for loading and/or unloading the cleaning chamber and closing the cleaning chamber;
(d) heating the adsorbent to desorb the solvent vapour
characterized in that in the desorption step (d) air is passed from the cleaning chamber (1; 101) at least once through the adsorber(s) (3; 103, 105, 107) containing the heated adsorbent, and the outlet stream from the adsorber(s) is directly recycled to the cleaning chamber (1; 101).

2. The method of Claim 1, wherein in step (b) the temperature of the non-condensed vapour/air mixture that passes the adsorber(s) (3, 5, 7) is below 50°C.

3. The method of Claim 1 or 2, wherein in step (d) the adsorbent is heated to a temperature of more than 70°C.

4. The method of any one of Claims 1 to 3, wherein the adsorbent for the organic solvent contains adsorptive porous resin beads prepared by swelling purified haloalkylated, cross-linked beads of a copolymer comprising units of (i) styrene or alkylstyrene and (ii) divinylbenzene and/or trivinylbenzene in an inert organic liquid and post-cross-linking the swollen beads in the presence of a Friedel-Crafts catalyst.

5. The method of Claim 4, wherein the adsorptive porous resin beads are microporous and are derived from (i) 99.8 to 98.2 weight percent of styrene or alkylstyrene and (ii) 0.2 to 1.8 weight percent of divinylbenzene and/or trivinylbenzene, based on the total weight of (i) and (ii).

6. Apparatus for cleaning articles comprising a cleaning chamber (1; 101), a condenser (2; 102), at least one adsorber (3; 103, 105, 107), a conduit system connecting the cleaning chamber, condenser and adsorber(s), a ventilator (4; 104) and a control system allowing the control of gas circulation in said conduit system, wherein
an outlet conduit (9; 109) of the cleaning chamber (1; 101) is connected with an inlet conduit (13; 113) of the condenser (2; 102) and with an inlet conduit (17; 117, 119, 121) of the adsorber(s) (3; 103, 105, 107);
an inlet conduit (11; 111) of the cleaning chamber (1; 101) is connected with an outlet conduit (15; 115) of the condenser (2; 102) and with an outlet conduit (23; 123, 125, 127) of the adsorber(s) (13; 103, 105, 107); and
the condenser and the adsorber(s) are in parallel,
characterized in that the ventilator (4; 104) and the control system allow only two ways of gas circulation in the conduit system connecting the cleaning chamber, condenser and adsorber(s), said ways either being
(i) cleaning chamber - condenser - cleaning chamber or
(ii) cleaning chamber - adsorber(s) - cleaning chamber.

7. The apparatus of Claim 6, wherein the ventilator (4; 104) is installed in the outlet conduit (9; 109) of the cleaning chamber (1; 101).

8. The apparatus of Claim 6 or 7, wherein the adsorber(s) (3; 103, 105, 107) is provided with a heat exchanger (6).

9. The apparatus of any one of Claims 6 to 8, wherein the adsorber contains an adsorbent for organic solvents comprising adsorptive porous resin beads prepared by swelling purified haloalkylated, cross-linked beads of a copolymer comprising units of i) styrene or alkylstyrene and ii) divinylbenzene and/or trivinylbenzene in an inert organic liquid and post-cross-linking the swollen beads in the presence of a Friedel-Crafts catalyst.

10. The apparatus of Claim 9 wherein the adsorptive porous resin beads are microporous and are derived from i) 99.8 to 98.2 weight percent of styrene or alkylstyrene and ii) 0.2 to 1.8 weight percent of divinylbenzene and/or trivinylbenzene, based on the total weight of i) and ii).

## Patentansprüche

1. Verfahren zur Steuerung der Konzentration von Lösungsmitteldampf bei der Reinigung von Gegenständen mit einem organischen Lösungsmittel, wobei der Lösungsmitteldampf mit Luft gemischt vorliegt und während der Trocknungsphase des Reinigungsprozesses in einer Reinigungskammer (1; 101) erhalten wird, nachdem die flüssige Komponente des Lösungsmittels weggepumpt worden ist, welches folgende Schritte umfasst:
(a) teilweise Kondensieren des Lösungsmitteldampfes;
(b) mindestens einmaliges Durchleiten der nicht-kondensierten Dampf-/Luftmischung durch mindestens einen Adsorber (3; 103, 105, 107), enthaltend ein Adsorbens für das organische Lösungsmittel und Zurückführen des austretenden Stromes aus dem (den) Adsorber(n) unmittelbar in die Reinigungskammer (1; 101);
(c) nach Vollendung der Adsorption Öffnen der Reinigungskammer, um die Reinigungskammer zum Beladen und/oder zum Entladen und Schliessen der Reinigungskammer;
(d) Erwärmen des Adsorbens um den Lösungsmitteldampf zu desorbieren,
dadurch gekennzeichnet, dass während des Desorptionsschrittes (d) Luft aus der Reinigungskammer (1; 101) mindestens einmal durch den (die) Adsorber (3; 103, 105, 107) enthaltend das erwärmte Adsorbens geleitet wird und der aus dem (den) Adsorber(n) austretende Strom unmittelbar in die Reinigungskammer (1; 101) zurückgeführt wird.

2. Verfahren nach Anspruch 1, wobei im Schritt (b) die Temperatur der nicht-kondensierten Dampf-/Luftmischung, welche durch den (die) Adsorber geleitet wird, unter 50°C liegt.

3. Verfahren nach Anspruch 1 oder 2, wobei im Schritt (d) das Adsorbens auf eine Temperatur von über 70°C erwärmt wird.

4. Verfahren nach einem der Ansprüche 1 bis 3, wobei das Adsorbens für das organische Lösungsmittel adsorptive poröse Harzperlen enthält, die hergestellt werden durch Quellen von gereinigten haloaklylierten vernetzten Perlen eines Copolymers, enthaltend Einheiten von i) Styrol oder Alkylstyrol und ii) Divinylbenzol und/oder Trivinylbenzol in einer inerten organischen Flüssigkeit, und Nachvernetzen der gequollenen Perlen in Anwesenheit eines Friedel-Crafts-Katalysators.

5. Verfahren nach Anspruch 4, wobei die adsorptiven porösen Harzperlen mikroporös sind und mit i) 99,8 bis 98,2 Gew.% Styrol oder Alkylstyrol und mit ii) 0,2 bis 1,8 Gew.% Divinylbenzol und/oder Trivinylbenzol, bezogen auf das Gesamtgewicht von i) und ii), hergestellt werden.

6. Vorrichtung zur Reinigung von Gegenständen umfassend eine Reinigungskammer (1; 101), einen Kondensator (2; 102), mindestens einen Adsorber (3; 103, 105, 107), ein Leitungssystem, welches die Reinigungskammer, den Kondensator und den (die) Adsorber verbindet, ein Gebläse (4; 104) und ein Steuersystem, das die Steuerung der Gaszirkulation im Leitungssystem ermöglicht, wobei
eine Auslassleitung (9; 109) der Reinigungskammer (1; 101) mit einer Einlassleitung (13; 113) des Kondensators (2; 102) und mit der Einlassleitung (17; 117, 119, 121) des (der) Adsorber (3; 103, 105, 107) verbunden ist;
eine Einlassleitung (11; 111) der Reinigungskammer (1; 101) mit einer Auslassleitung (15; 115) des Kondensators (2; 102) und mit einer Auslassleitung (23; 123, 125, 127) des (der) Adsorber (3; 103, 105, 107) verbunden ist; und
der Kondensator und der (die) Adsorber parallel angeordnet sind,
dadurch gekennzeichnet, dass das Gebläse (4, 104) und das Steuersystem nur zwei Wege der Gaszirkulation im Leitungsystem erlauben, das die Reinigungskammer, den Kondensator und den (die) Adsorber verbindet, wobei diese Wege entweder
(i) Reinigungskammer - Kondensator - Reinigungskammer, oder
(ii) Reinigungskammer - Adsorber - Reinigungskammer sind.

7. Vorrichtung nach Anspruch 6, wobei das Gebläse (4; 104) in der Auslassleitung (9; 109) der Reinigungskammer (1; 101) angeordnet ist.

8. Vorrichtung nach Anspruch 6 oder 7, wobei der (die) Adsorber (3; 103, 105, 107) mit einem Wärmetauscher (6) versehen ist (sind).

9. Vorrichtung nach einem der Ansprüche 6 bis 8, wobei der Adsorber ein Adsorbens für organische Lösungsmittel enthält, die adsorptive poröse Harzperlen umfassen, die hergestellt sind durch Quellen von gereinigten haloaklylierten vernetzten Perlen eines Copolymers, enthaltend Einheiten von i) Styrol oder Alkylstyrol und ii) Divinylbenzol und/oder Trivinylbenzol in einer inerten organischen Flüssigkeit, und Nachvernetzen der gequollenen Perlen in Anwesenheit eines Friedel-Crafts-Katalysators.

10. Vorrichtung nach Anspruch 9, wobei die adsorptiven porösen Harzperlen mikroporös sind und mit i) 99,8 bis 98,2 Gew.% Styrol oder Alkylstyrol und mit ii) 0,2 bis 1,8 Gew.% Divinylbenzol und/oder Trivinylbenzol, bezogen auf das Gesamtgewicht von i) und ii), hergestellt werden.

## Revendications

1. Procédé pour limiter la concentration de la vapeur de solvant lors du nettoyage d'articles avec un solvant organique, laquelle vapeur de solvant est mélangée avec de l'air et est obtenue dans une chambre de nettoyage (1;101) pendant l'étape de séchage du procédé de nettoyage après que le composant liquide du solvant ait été éliminé par pompage, ledit procédé comprenant les étapes consistant
(a) à condenser partiellement la vapeur de solvant,
(b) à faire passer le mélange vapeur de solvant/air non condensé au moins une fois à travers au moins un dispositif d'adsorption (3; 103; 105; 107) contenant un adsorbant de solvants organiques et à recycler le flux sortant du ou des dispositif(s) d'adsorption directement vers la chambre de nettoyage (1, 101),
(c) à ouvrir, après la fin de l'adsorption, la chambre de nettoyage pour charger et/ou décharger la chambre de nettoyage et à fermer la chambre de nettoyage,
(d) à chauffer l'adsorbant afin de désorber la vapeur de solvant, caractérisé en ce que, dans l'étape d'adsorption (d), on fait passer l'air de la chambre de nettoyage (1, 101) au moins une fois à travers le(s) dispositif(s) d'adsorption (3, 103, 105, 107) contenant l'adsorbant chauffé, et en ce que le courant sortant du ou des dispositif(s) d'adsorption est recyclé directement vers la chambre de nettoyage (1, 101).

2. Procédé conforme à la revendication 1 dans lequel, dans l'étape (b), la température du mélange vapeur de solvant/air passant à travers le ou les dispositif(s) d'adsorption (3, 5, 7) est inférieure à 50 °C.

3. Procédé conforme à la revendication 1 ou 2 dans lequel, dans l'étape (d), l'adsorbant est chauffé à une température supérieure à 70 °C.

4. Procédé conforme à une quelconque des revendications 1 à 3, dans lequel l'adsorbant du solvant organique contient des billes poreuses de résine adsorbante, préparées par gonflement de billes réticulées halogénoalkylées purifiées d'un copolymère contenant des motifs (i) styrène ou alkylstyrène et (ii) divinylbenzène et/ou trivinylbenzène dans un liquide organique inerte et par post-réticulation des billes gonflées en présence d'un catalyseur de Friedel-Crafts.

5. Procédé conforme à la revendication 4 dans lequel les billes poreuses de résine adsorbante sont microporeuses et sont préparées à partir de (i) 99,8 % à 98,2 % en poids de styrène ou d'alkylstyrène et (ii) de 0,2 à 1,8 % en poids de divinylbenzène et/ou de trivinylbenzène, par rapport au poids total de (i) et (ii).

6. Appareil de nettoyage d'articles comprenant une chambre de nettoyage (1, 101), un condenseur (2, 102), au moins un dispositif d'adsorption (3, 103, 105, 107), un système de conduits reliant la chambre de nettoyage, le condenseur et le ou les dispositif(s) d'adsorption, un ventilateur (4, 104) et un système de contrôle permettant de contrôler la circulation de gaz dans ledit système de conduits, dans lequel un conduit de sortie (9, 109) de la chambre de nettoyage (1, 101) est connecté à un conduit d'entrée (13, 113) du condenseur (2, 102) et à un conduit d'entrée (17, 117, 119, 119) du ou des dispositif(s) d'adsorption (3, 103, 105, 107), un conduit d'entrée (11, 111) de la chambre de nettoyage (1, 101) est connecté à un conduit de sortie (15, 115) du condenseur (2, 102) et à un conduit de sortie (23, 123, 125, 127) du ou des dispositif(s) d'adsorption (13, 103, 105, 107), et le condenseur et le ou les dispositif(s) d'adsorption sont montés en parallèle,
caractérisé en ce que le ventilateur (4, 104) et le système de contrôle permettent seulement deux voies de circulation des gaz dans le système de conduits reliant la chambre de nettoyage, le condenseur et le ou les dispositif(s) d'adsorption, lesdites voies étant
(i) chambre de nettoyage - condenseur - chambre de nettoyage ou
(ii) chambre de nettoyage - dispositif(s) d'adsorption - chambre de nettoyage.

7. Appareil conforme à la revendication 6 dans lequel le ventilateur (4, 104) est monté dans le conduit de sortie (9, 109) de la chambre de nettoyage (1, 101).

8. Appareil conforme à la revendication 6 ou 7 dans lequel le ou les dispositif(s) d'adsorption (3, 103, 105, 107) sont munis d'un échangeur de chaleur (6).

9. Appareil conforme à une quelconque des revendications 6 à 8 dans lequel le dispositif d'adsorption contient un adsorbant de solvants organiques constitué de billes poreuses de résine adsorbante, préparées par gonflement de billes réticulées halogénoalkylées purifiées d'un copolymère contenant des motifs (i) styrène ou alkylstyrène et (ii) divinylbenzène et/ou trivinylbenzène dans un liquide organique inerte et par post-réticulation des billes gonflées en présence d'un catalyseur de Friedel-Crafts.

10. Appareil conforme à la revendication 9 dans lequel les billes poreuses de résine adsorbante sont microporeuses et sont préparées à partir de (i) 99,8 % à 98,2 % en poids de styrène ou d'alkylstyrène et (ii) de 0,2 à 1,8 % en poids de divinylbenzène et/ou de trivinylbenzène, par rapport au poids total de (i) et (ii).
